# EUROPEAN PATENT APPLICATION

(11) **EP 4 496 145 A1**
(43) Date of publication of application: **22.01.2025**
(21) Application number: 23769761.0
(22) Date of filing: 14.03.2023
(51) Int. Cl.: H01R 31/06, H01R 13/73, H01R 13/6581, H01B 7/04, H01B 9/02, H01B 7/18, H01B 7/40, H01B 7/42, B60L 53/16, B60L 53/18

(54) **CONNECTOR ASSEMBLY HAVING SOLID-STATE COOLING MEDIUM, AND VEHICLE**

(30) Priority: 14.03.2022 CN 202210248418
(71) Applicant: Jilin Zhong Ying High Technology Co., Ltd., Jilin 130028 (CN)
(72) Inventor: WANG, Chao, Changchun, Jilin 130028 (CN)
(74) Representative: Habermann, Hruschka & Schnabel
(86) International application number: PCT/CN2023/081322
(87) International publication number: WO 2023/174259

(57) **Abstract**

A connector assembly having a solid-state cooling medium, and a vehicle. The connector assembly includes at least one electrical connection framework and connectors connected to two ends of the electrical connection framework. An outer periphery of the electrical connection framework is sleeved with a protective shell, and a solid-state or semi-solid-state cooling medium is at least partially filled between an outer wall of the electrical connection framework and an inner wall of the protective shell. The present disclosure can reduce the high-temperature failure and the diameter of the electrical connection framework, prolong the service life of the connector assembly, improve the safety of the whole vehicle and shield the electromagnetic interference.

## Description

### RELATED APPLICATION

The present disclosure claims priority to Chinese Patent Application No. 202210248418.9, entitled "connector assembly having solid-state cooling medium, and vehicle", and filed to the China National Intellectual Property Administration on March 14, 2022, which is hereby incorporated by reference in its entirety.

### TECHNICAL FIELD

The present disclosure relates to the technical field of vehicle electrical appliances, and particularly to a connector assembly having a solid-state cooling medium, and a vehicle.

### BACKGROUND

As new energy vehicles are increasingly popular, equipment and facilities to realize electrical connections for the new energy vehicles have also been developed. Since a connector assembly on a new energy vehicle should meet the requirement of fast current transmission, the transmission current is large, and the diameter of a cable on the connector assembly also increases, such that the assembling on a vehicle body can only adopt manual mounting, which causes the wastes of a labor cost and a time cost.

In addition, during normal use, very large current flows through the cable of the new energy vehicle, such that a lot of heat is generated in both the cable and attachment joints. A high temperature will occur due to excessive heat, and the connection position of a charging cable and the surrounding connectors and fasteners will be failed due to the high temperature, which will affect the normal use of the connector assembly, resulting in short circuit and open circuit, and even the danger of electric shock that is life-threatening.

The cable of the new energy vehicle will produce strong electromagnetic interference due to the large current. In order to reduce the influence of the electromagnetic interference, the cable usually uses a shielding net to shield the electromagnetic interference. At present, the conventional shielding net is braided with metal wires, and it is necessary to add a shielding braiding machine in the cable production equipment, such that the equipment price is high and a large area is occupied, resulting in a high price of the shielding cable of the connector assembly. In addition, the shielding technology for the connector is not perfect enough at present, such that the electrical appliances in the vehicle are interfered with and cannot be used.

Currently, there is no practical solution to the above problems. Therefore, the technical field of vehicle electrical appliances is in urgent need of a connector assembly with a small wire diameter and a low cable heat generation amount, which can realize automatic production and assembling.

### SUMMARY

The present disclosure aims to provide new technical solutions of a connector assembly having a solid-state cooling medium, and an electric vehicle. The connector assembly having a solid-state cooling medium of the present disclosure can reduce the failures of an electrical connection framework and a connection terminal caused by a high temperature during electrification, decrease the diameter of the electrical connection framework, prolong a service life of a connector, improve the safety of the whole vehicle, while shielding the electromagnetic interference.

According to a first aspect of the present disclosure, there is provided a connector assembly having a solid-state cooling medium, including at least one electrical connection framework and connectors connected to two ends of the electrical connection framework. An outer periphery of the electrical connection framework is sleeved with a protective shell having shielding effectiveness, and a solid-state or semi-solid-state cooling medium is at least partially filled between an outer wall of the electrical connection framework and an inner wall of the protective shell.

Optionally, the connector includes a connection terminal, to which the electrical connection framework is electrically connected by means of welding or crimping.

Optionally, the electrical connection framework includes a rigid solid conductor.

Optionally, a portion of the electrical connection framework is flexible.

Optionally, the electrical connection framework comprises at least one bent portion.

Optionally, the electrical connection framework has a cross section of polygonal shape, all corners of which are chamfered or rounded.

Optionally, the electrical connection framework has a cross section of one or more selected from the group consisting of a circular shape, an elliptical shape, a rectangular shape, a polygonal shape, an A shape, a B shape, a D shape, an M shape, a P shape, an N shape, an O shape, an S shape, an E shape, an F shape, an H shape, a K shape, an L shape, a T shape, a U shape, a V shape, a W shape, an X shape, a Y shape, a Z shape, a semi-arc shape, an arc shape and a wavy shape.

Optionally, a cross-sectional area of the electrical connection framework is 0.3 mm² to 240 mm².

Optionally, the protective shell is made of a material containing conductive metal or conductive plastic cement.

Optionally, the connector further includes a shielding inner shell which is made of a material containing conductive metal or conductive plastic cement.

Optionally, a transfer impedance of the conductive metal or the conductive plastic cement is less than 100 mS2.

Optionally, the conductive plastic cement is a polymer material containing conductive particles, and the conductive particles are made of a material containing one or more selected from the group consisting of metal, conductive ceramics, a carbon-containing conductor, a solid electrolyte and a mixed conductor. The polymer material contains one or more selected from the group consisting of tetraphenyl ethylene, polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluorinated liquid, polyurethane, polyterephthalic acid, polyurethane elastomer, styrene block copolymer, perfluoroalkoxy alkane, chlorinated polyethylene, polyphenylene sulfide, polystyrene, cross-linked polyolefin, ethylene-propylene rubber, ethylene/vinyl acetate copolymer, chloroprene rubber, natural rubber, styrene butadiene rubber, nitrile rubber, silicone rubber, butadiene rubber, isoprene rubber, ethylene propylene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, and polyoxymethylene resin.

Optionally, a material of the metal contains one or more selected from the group consisting of nickel, cadmium, zirconium, chromium, cobalt, manganese, aluminum, tin, titanium, zinc, copper, silver, gold, phosphorus, tellurium and beryllium.

Optionally, the carbon-containing conductor contains one or more selected from the group consisting of graphite powder, a carbon nanotube material, a graphene material, graphite silver or graphene silver.

Optionally, the protective shell is electrically connected to the shielding inner shell by means of crimping or welding.

Optionally, an impedance between the protective shell and the shielding inner shell is less than 80mQ.

Optionally, a thickness of the protective shell accounts for 1% to 15% of an outer diameter of the electrical connection framework.

Optionally, a volume of the cooling medium accounts for more than 1.1% of a volume between the outer wall of the electrical connection framework and the inner wall of the protective shell.

Optionally, the cooling medium is unevenly distributed between the outer wall of the electrical connection framework and the inner wall of the protective shell.

Optionally, the cooling medium is a heat-conductive tape, a heat-conductive insulation elastic rubber, a flexible heat-conductive pad, a heat-conductive filling agent or a heat-conductive insulation potting compound.

Optionally, the cooling medium is disposed on the outer periphery of the electrical connection framework by means of injection molding, extrusion molding, dipping molding, foaming, winding, weaving, pouring or wrapping.

Optionally, the cooling medium contains one or more selected from the group consisting of quartz glass, silicon carbide, mica, sand and gravel, diamond, silicon, graphene and derivatives thereof or silicone grease.

Optionally, a cooling rate of the cooling medium to the electrical connection framework is 0.05 K/s to 10 K/s.

Optionally, one of the connectors is a charging cradle.

The present disclosure further provides a vehicle, including the aforementioned connector assembly having a solid-state cooling medium.

The present disclosure has the following advantageous effects:
1. The present disclosure solves the problem that the wire diameter of the charging wire harness at present is large. The solid-state cooling technology is used to reduce the heat generation amount of the electrical connection framework, so that the electrical connection framework can conduct a large current with a small wire diameter.
2. The present disclosure solves the problem that the automatic production and assembling cannot be realized due to the use of flexible cables for the high-voltage wire harnesses at present. The automatic fitting and assembling of the wire harness can be realized using the electrical connection framework which is at least partially rigid.
3. The present disclosure solves the problem of the low cooling efficiency of the liquid-cooled wire harness at present. The liquid-cooled wire harness is cooled through a liquid-cooled pipe at present, while in the present disclosure, the solid-state cooling medium directly contacts the electrical connection framework, so that the temperature of the electrical connection framework can be quickly decreased to realize a high current conduction.
4. The present disclosure solves the problem that the flexible cable contacts and rubs the vehicle shell, which cause the damage and short circuit of the insulation layer. The electrical connection framework can be arranged according to the shape of the vehicle body, while keeping a distance from the vehicle body to avoid rubbing the vehicle shell, thereby ensuring the service life of the electrical connection framework.
5. The connector is provided with a shielding inner shell, which can effectively prevent the electromagnetic interference generated by the terminal of the connector. The shielding inner shell made of conductive plastic can be integrally formed with the connector by means of integral injection molding, which saves the machining time, improves the production efficiency and reduces the production cost.
6. The electrical connection framework includes a flexible portion and a bent portion, so that the structure of the connector assembly can be reasonably designed according to the mounting environment of the vehicle body, which makes the mounting of the connector assembly on the vehicle body easier and saves the assembling time.
7. The electrical connection framework is sleeved with the protective shell, which not only constructs the cavity, but also serves as a shielding layer to effectively shield the electromagnetic interference generated by the electrification of the electrical connection framework.

Other features and advantages of the present disclosure will become clear from the following detailed description of the exemplary embodiments of the present disclosure made with reference to the drawings.

### BRIEF DESCRIPTION OF THE DRAWINGS

The drawings, which are incorporated in and constitute a part of the specification, illustrate the embodiments of the present disclosure and together with the description, serve to explain the principles of the present disclosure.
FIG. 1 illustrates a structural schematic diagram of a connector assembly having a solid-state cooling medium according to the present disclosure.
FIG. 2 illustrates a structural schematic diagram of a shielding inner shell of a connector assembly having a solid-state cooling medium according to the present disclosure.

Reference numerals of the main components:
1-connector; 2-electrical connection framework; 3-connection terminal; 4-shielding inner shell; 5-protective shell.

### DETAILED DESCRIPTION OF THE EMBODIMENTS

Various exemplary embodiments of the present disclosure will now be described in detail with reference to the drawings. It should be noted that the relative arrangements, the numerical expressions and the numerical values of components and steps set forth in these embodiments do not limit the scope of the present disclosure unless otherwise specified.

The following description of at least one exemplary embodiment is merely illustrative and is in no way intended to limit the present disclosure or the application or the use thereof.

Technologies, methods and devices known to those of ordinary skill in the art may not be discussed in detail, but they should be regarded as parts of the specification under appropriate circumstances.

In all examples illustrated and discussed here, any specific value should be interpreted as illustrative only rather than limiting. Thus, other examples of the exemplary embodiments may have different values.

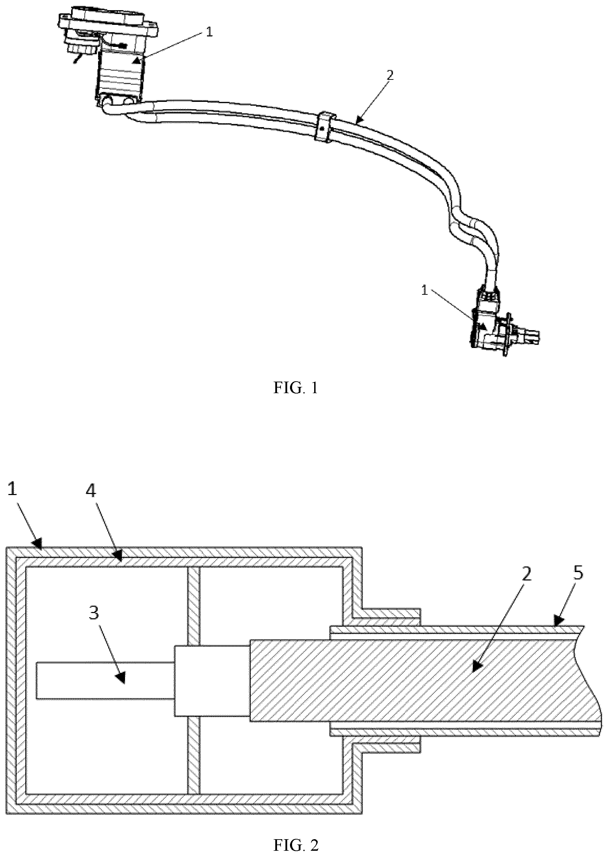

As illustrated in FIGS. 1 and 2, a connector assembly having a solid-state cooling medium includes at least one electrical connection framework 2 and connectors 1 connected to two ends of the electrical connection framework 2. An outer periphery of the electrical connection framework 2 is sleeved with a protective shell 5 having shielding effectiveness, and a solid or semi-solid-state cooling medium is at least partially filled between an outer wall of the electrical connection framework 2 and an inner wall of the protective shell 5.

At present, the charging cables on most of the connector assemblies use multi-core copper cables, which are heavy and expensive and become an obstacle to the popularization of new energy vehicles. In addition, although the multi-core cable is soft and can be easily machined and wired, the wire diameter is too large and the weight is heavy. During travelling of the vehicle, the cable will frequently rub a vehicle shell, thereby damaging the insulation layer of the cable and resulting in a high-voltage discharge, which will damage the vehicle or cause serious traffic accidents in severe cases. Thus, the multi-core cable structure may be replaced by the cable form of the electrical connection framework 2, such that the cable can be fixed on the vehicle shell, without rubbing the vehicle shell along with the vibration of the vehicle, thereby prolonging the service life of the connector assembly and reducing the accident rate. When the vehicle is charged, the current flowing through the electrical connection framework 2 is very large, leading to a rapid increase in the temperature of the electrical connection framework 2. The solid or semi-solid-state cooling medium is filled between the protective shell having shielding effectiveness and the electrical connection framework 2 to cool the electrical connection framework 2, thereby reducing the temperature of the electrical connection framework 2 which generates heat, and enabling the connector assembly to work at a safe temperature.

In some embodiments, the connector 1 includes a connection terminal 3, and the electrical connection framework 2 is electrically connected to the connection terminal 3 by means of welding or crimping. The connection terminal 3 is connected to the electrical connection framework 2 by welding. The welding modes, which include one or more selected from the group consisting of resistance welding, friction welding, ultrasonic welding, arc welding, laser welding, electron beam welding, pressure diffusion welding and magnetic induction welding, use the concentrated heat energy or pressure to achieve a fusion connection at the contact positions of the connection terminal 3 and the electrical connection framework 2, such that the connection by welding is stable.

In addition, the metal inertia of copper is greater than that of aluminum, and an electrode potential difference between copper and aluminum is 1.9997 V. An electrochemical reaction will occur when the two metals are connected and electrified, which will lead to a gradual oxidation of aluminum wires, reducing the mechanical strength and the electrical conductivity of aluminum wires. Dissimilar materials can be connected by welding, and the conductive effect is better since the contact positions are fused.

The resistance welding refers to a method of welding by passing strong current through a contact point that is between an electrode and a workpiece, to generate heat by a contact resistance.

The friction welding refers to a method of welding by using the heat generated by the friction between the contact surfaces of the workpieces as a heat source, to make the workpieces be plastically deformed under pressure.

The ultrasonic welding is to transmit high-frequency vibration waves to surfaces of two to-be-welded objects, so that the surfaces of the two objects rub against each other under pressure to form a fuse molecular layer.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method that uses a laser beam with high energy density as a heat source.

The friction welding refers to a method of welding by using the heat generated by the friction between the contact surfaces of the workpieces as a heat source, to make the workpieces be plastically deformed under pressure.

The electron beam welding method refers to a method of using accelerated and focused electron beam to bombard the welding surface that is placed in vacuum or non-vacuum, to melt the welded workpiece to realize welding.

The pressure welding method is a method of applying pressure to weldments to make binding surfaces of them be in close contact and generate a certain plastic deformation to complete the welding.

The magnetic induction welding refers to that that two to-be-welded workpieces are instantaneously collided with each other at high speed under the action of a strong pulsed magnetic field, so that under the action of high pressure waves, the atoms of the two materials on the material surfaces of the two workpieces can meet within interatomic distance, thus forming a stable metallurgical bond at the interface. The magnetic induction welding is a type of solid-state cold welding that can weld conductive metals with similar or dissimilar properties.

The crimping is a production process in which the electrical connection framework 2 and the connection terminal 3 are assembled and then stamped into a whole using a crimping machine. The crimping has the advantage of mass production, and by adopting an automatic crimping machine, products with a stable quality can be rapidly manufactured in large quantities.

In some embodiments, the material of the connection terminal 3 contains copper or copper alloy. Copper or copper alloy has high electrical conductivity and friction resistance, and at present, the power connection parts of most of the electrical devices are made of copper, so the connection terminal 3 made of copper or copper alloy can be used for plugging and unplugging connection, and the connection terminal 3 can be widely used in various electrical transmission scenarios.

In some embodiments, the electrical connection framework 2 includes a rigid solid conductor. That is, the electrical connection framework 2 is formed by one solid conductor, and the specific material may be copper or copper alloy or aluminum or aluminum alloy which has excellent electrical conductivity.

In some embodiments, a portion of the electrical connection framework 2 is a flexible body. The flexible body ensures that the electrical connection framework 2 can be bent at a large angle, so as to be conveniently disposed in the vehicle body with a large corner. Meanwhile, the flexible body can absorb the vibration of the electrical connection framework 2, so that the vibration of the electrical connection framework 2 will not affect the connector and other corresponding electrical devices on the vehicle body.

In some embodiments, the electrical connection framework 2 includes at least one bent portion to meet the requirement of mounting the electrical connection framework 2 on the vehicle body.

In some embodiments, a cross-sectional shape of the electrical connection framework is one or more selected from the group consisting of a circular shape, an elliptical shape, a rectangular shape, a polygonal shape, an A shape, a B shape, a D shape, an M shape, an N shape, an O shape, an S shape, an E shape, an F shape, an H shape, a K shape, an L shape, a P shape, a T shape, a U shape, a V shape, a W shape, an X shape, a Y shape, a Z shape, a semi-arc shape, an arc shape and a wavy shape. The electrical connection frameworks 2 with different cross-sectional shapes can be selected as needed.

In some embodiments, a cross-sectional shape of the electrical connection framework 2 is a polygonal shape, all corners of which are chamfered or rounded. When the electrical connection framework 2 has edges, the edges may be rounded or chamfered to prevent the sharp parts thereof from damaging the contacted parts.

In some embodiments, the electrical connection framework 2 made of a material containing aluminum or aluminum alloy has the advantages of good rigidity, light weight and high transmission efficiency, and is especially suitable for the transmission of large current.

In some embodiments, a cross-sectional area of the electrical connection framework 2 is 0.3 mm² to 240 mm². The cross-sectional area of the electrical connection framework 2 determines the magnitude of the current that can be conducted by the electrical connection framework 2. Generally, the electrical connection framework 2 that realizes signal conduction has a small current and a small cross-sectional area. For example, a minimum cross-sectional area of the electrical connection framework 2 for signal transmission may be 0.3 mm². The electrical connection framework 2 that realizes power conduction has a large current and a large cross-sectional area. For example, a maximum cross-sectional area of a conductor of a vehicle battery wire harness may reach 240 mm².

In some embodiments, the protective shell 5 is made of a material containing conductive metal or conductive plastic cement. The conductive plastic cement is conductive plastic or conductive rubber containing metal particles. The advantage of using the conductive plastic cement is to facilitate the injection molding, and the user can select the protective shell 5 made of a suitable material as needed.

In some embodiments, the connector 1 further includes a shielding inner shell 4 made of a material containing conductive metal or conductive plastic cement. The conductive plastic cement is conductive plastic or conductive rubber containing metal particles. The advantage of the conductive plastic cement is to facilitate the injection molding, and the user can select the shielding inner shell 4 made of a suitable material as needed. In order to reduce the influence of the electromagnetic interference, the conductive cable usually uses a shielding net to shield the electromagnetic interference. At present, the conventional shielding net is braided with metal wires, and a shielding braiding machine has to be added in the cable production equipment, such that the equipment price is high and a large area is occupied, resulting in a high price of the shielding cable of the connector 1. In the present disclosure, the shielding inner shell 4 made of a conductive material is electrically connected to the protective shell having shielding effectiveness to form a complete shielding device which can serve as a shielding layer, thereby effectively shielding the electromagnetic interference generated by the electrification of the electrical connection framework 2, saving the use of the shielding net and reducing the cost of the connector assembly.

Since the electrical connection framework 2 conducts a large current, and the protective shell 5 having shielding effectiveness needs to be electrified in order to achieve the shielding effect, there should be no electrical connection between the electrical connection framework 2 and the protective shell 5 having shielding effectiveness, otherwise short circuit will be caused. Therefore, the cooling liquid circulated in the cavity 6 between the electrical connection framework 2 and the protective shell 5 should be insulated.

In some embodiments, a transfer impedance of the conductive metal or the conductive plastic cement is less than 100 mQ. The shielding material usually adopts the transfer impedance to represent the shielding effect of the protective shell 5. The shielding effect gets better as the transfer impedance decreases. The transfer impedance of the protective shell 5 is defined as a ratio of a differential mode voltage U induced by a shield per unit length to current Is passing through a surface of the shield, that is: Z_{T}=U/I_{S}, so it can be understood that the transfer impedance of the protective shell 5 converts the current thereof into a differential mode interference. The transfer impedance should be as small as possible, i.e., a better shielding performance can be obtained by reducing the conversion of the differential mode interference.

In order to verify the influence of different transfer impedances of the protective shell 5 on the shielding effects, the inventor selects the electrical connection frameworks 2 with the same specification, the connectors 1 with the same specification, the connection terminals 3 with the same specification, and the protective shells 5 with different transfer impedances to make a series of samples, so as to test the shielding effects respectively. The experimental results are shown in Table 1. In this embodiment, the shielding performance value greater than 40 dB is an ideal value.

The test method of the shielding performance value is to adopt a test instrument that outputs a signal value (which is a test value 2) to the electrical connection framework 2, and dispose a detection device which detects a signal value (which is a test value 1) outside the electrical connection framework 2. The shielding performance value = the test value 2 - the test value 1.

**Table 1: Influence of the transfer impedance of the protective shell 5 on the shielding performance**

| Test parameter | Transfer impedance of the protective shell 5 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 71 | 67 | 63 | 58 | 53 | 46 | 43 | 30 | 26 |

As can be seen from Table 1, when the transfer impedance of the protective shell 5 is greater than 100 mΩ, the shielding performance value of the protective shell 5 is less than 40 dB, which does not meet the requirement of the ideal value. When the transfer impedance of the protective shell 5 is less than 100 mΩ, all of the shielding performance values of the protective shell 5 meet the requirement of the ideal value, and the trend is increasingly better. Therefore, the inventor sets the transfer impedance of the protective shell 5 to be less than 100 mQ.

In some embodiments, the conductive plastic cement is a polymer material containing conductive particles, and the conductive particles are made of a material containing one or more selected from the group consisting of metal, conductive ceramics, a carbon-containing conductor, a solid electrolyte and a mixed conductor. The polymer material contains one or more selected from the group consisting of tetraphenyl ethylene, polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluorinated liquid, polyurethane, polyterephthalic acid, polyurethane elastomer, styrene block copolymer, perfluoroalkoxy alkane, chlorinated polyethylene, polyphenylene sulfide, polystyrene, cross-linked polyolefin, ethylene-propylene rubber, ethylene/vinyl acetate copolymer, chloroprene rubber, natural rubber, styrene butadiene rubber, nitrile rubber, silicone rubber, butadiene rubber, isoprene rubber, ethylene propylene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, and polyoxymethylene resin. The conductive plastic cement containing different particles may be selected as needed.

In some embodiments, a material of the metal contains one or more selected from the group consisting of nickel, cadmium, zirconium, chromium, cobalt, manganese, aluminum, tin, titanium, zinc, copper, silver, gold, phosphorus, tellurium and beryllium. In order to verify the influence of different metal materials on the electrical conductivity of the shielding inner shell 4, the inventor makes samples of the shielding inner shell 4 with metal particles of the same size and different materials to test the electrical conductivities of the shielding inner shell 4, respectively. The experimental results are shown in Table 2. In this embodiment, the electrical conductivity of the shielding inner shell 4 greater than 99% is an ideal value.

**Table 2: Influence of metal particles with different materials on the electrical conductivity of the shielding inner shell 4**

| Metals of different materials | | | | | | | | | | | | | | | |
|---|---|---|---|---|---|---|---|---|---|---|---|---|---|---|---|
| Gold | Silver | Copper | Nickel | Titanium | Tin | Aluminum | Cadmium | Zirconium | Chromium | Cobalt | Manganese | Zinc | Tellurium | Beryllium | Palladium |

| Electrical conductivity of the shielding inner shell 4 (%) | | | | | | | | | | | | | | | |
|---|---|---|---|---|---|---|---|---|---|---|---|---|---|---|---|
| 99.8 | 99.9 | 99.8 | 99.5 | 99.5 | 99.5 | 99.6 | 99.3 | 99.2 | 99.2 | 99.4 | 99.5 | 99.3 | 99.4 | 99.4 | 99.2 |

As can be seen from Table 2, the electrical conductivities of the conductive plastic made of different selected metal particles are within the range of the ideal value. In addition, phosphorus is a non-metallic material and cannot be directly used as the material of the conductive plating layer, but it can be added to other metal to form an alloy to improve the conductive and mechanical properties of the metal itself. Therefore, the inventor sets that the metal particles are made of a material containing one or more selected from the group consisting of nickel, cadmium, zirconium, chromium, cobalt, manganese, aluminum, tin, titanium, zinc, copper, silver, gold, phosphorus, tellurium and beryllium.

Further, the carbon-containing conductor contains one or more selected from the group consisting of graphite powder, carbon nanotube material, graphene material, graphite silver, or graphene silver. The graphite powder is a mineral powder with the main component of carbon, which is soft and dark gray and is a very good nonmetallic conductive substance. The carbon nanotube has good electrical conductivity, with a structure the same as the lamellar structure of graphite, so it has good electrical properties. Graphene has extremely high electrical properties. The carbon-containing conductor containing the three materials has high electrical conductivity and good shielding performance, which can well realize the electromagnetic shielding of the electrical connection framework 2.

In some embodiments, the protective shell 5 is electrically connected to the shielding inner shell 4 by means of crimping or welding. Aluminum or aluminum alloy has good electrical conductivity, light weight and low price. The shielding inner shell 4 made of aluminum or aluminum alloy can achieve a good shielding effect and prevent the electromagnetic radiation of the connection terminal 3 and the electrical connection framework 2 from affecting other devices.

The crimping is a production process in which the shielding inner shell 4 and the protective shell 5 are assembled and then stamped into a whole using a crimping machine. The crimping has the advantage of mass production, and by adopting an automatic crimping machine, products with a stable quality can be rapidly manufactured in large quantities.

The welding mode is substantially the same as that of the connection terminal 3 and the electrical connection framework 2, and will not be described in detail.

In some embodiments, an impedance between the protective shell 5 and the shielding inner shell 4 is less than 80 mS2.

The impedance between the protective shell 5 and the shielding inner shell 4 should be as small as possible, so that the current generated by the shielding inner shell 4 can flow back to an energy source or a grounding position without hindrance. If the impedance between the protective shell 5 and the shielding inner shell 4 is large, a large current will be generated between the protective shell 5 and the shielding inner shell 4, thereby generating a large radiation at the cable joint.

In order to verify the influence of the impedance between the protective shell 5 and the shielding inner shell 4 on the shielding effects, the inventor selects the electrical connection frameworks 2 with the same specification, the connectors 1 with the same specification, the connection terminals 3 with the same specification, and different impedances between the protective shell 5 and the shielding inner shell 4 to make a series of samples, so as to test the shielding effects respectively. The experimental results are shown in Table 3. In this embodiment, the shielding performance value greater than 40 dB is an ideal value.

The test method of the shielding performance value is to adopt a test instrument that outputs a signal value (which is a test value 2) to the electrical connection framework 2, and dispose a detection device which detects a signal value (which is a test value 1) outside the electrical connection framework 2. The shielding performance value = the test value 2 - the test value 1.

**Table 3: Influence of the impedance between the protective shell 5 and the shielding inner shell 4 on the shielding performance**

| Test parameter | Impedance between the protective shell 5 and the shielding inner shell 4 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 76 | 74 | 72 | 66 | 61 | 57 | 52 | 49 | 43 | 32 | 28 |

As can be seen from Table 3, when the impedance value between the protective shell 5 and the shielding inner shell 4 is greater than 80 mΩ, the shielding performance value is less than 40 dB, which does not meet the requirement of the ideal value. However, when the impedance value between the protective shell 5 and the shielding inner shell 4 is less than 80 mQ, all of the shielding performance values meet the requirement of the ideal value, and the trend is increasingly better. Therefore, the inventor sets the impedance between the protective shell 5 and the shielding inner shell 4 to be less than 80 mS2.

In some embodiments, a thickness of the protective shell 5 accounts for 1% to 15% of an outer diameter of the electrical connection framework 2. If the thickness of the protective shell 5 is too small, the electrical conductivity is insufficient and the shielding effect cannot meet the requirement. If the thickness of the protective shell 5 is too large, the materials will be wasted and the weight of the vehicle body will be increased. In order to verify the influence of different ratios of the thickness of the protective shell 5 to the outer diameter of the electrical connection framework 2 on the electrical conductivity of the protective shell 5, the inventor makes samples of the protective shell 5 with different thicknesses and the same material, and tests the electrical conductivity respectively. The experimental results are shown in Table 4. In this embodiment, the electrical conductivity of the protective shell 5 not less than 99% is an ideal value.

**Table 4: Influence of different ratios of the thickness of the protective shell 5 to the outer diameter of the electrical connection framework 2 on the electrical conductivity**

| Ratios of different thicknesses of the protective shell 5 to the outer diameter of the electrical connection framework 2 (%) | | | | | | | | | | | | | | |
|---|---|---|---|---|---|---|---|---|---|---|---|---|---|---|
| 0.8 | 1 | 2 | 3 | 4 | 5 | 7 | 9 | 10 | 11 | 12 | 13 | 14 | 15 | 16 |

| Electrical conductivity (%) | | | | | | | | | | | | | | |
|---|---|---|---|---|---|---|---|---|---|---|---|---|---|---|
| 98.9 | 99 | 99 | 99.1 | 99.1 | 99.2 | 99.3 | 99.4 | 99.5 | 99.6 | 99.7 | 99.8 | 99.8 | 99.9 | 99.9 |

As can be seen from Table 4, when the ratio of the thickness of the protective shell 5 to the outer diameter of the electrical connection framework 2 is less than 1%, the electrical conductivity of the protective shell 5 is less than 99%, which is unqualified. When the ratio of the thickness of the protective shell 5 to the outer diameter of the electrical connection framework 2 is greater than 15%, the electrical conductivity has no significant increase, the shielding effect will not be further enhanced, and the thicker protective shell 5 will increase the cost and the weight of the vehicle body. Therefore, the inventor prefers that the ratio of the thickness of the protective shell 5 to the outer diameter of the electrical connection framework 2 is 1% to 15%.

In some embodiments, a volume of the cooling medium accounts for more than 1.1% of a volume of a space between an outer wall of the electrical connection framework 2 and an inner wall of the protective shell 5. Generally, the heating positions of the electrical connection framework 2 are concentrated in the bent portions or joints, and these positions have large resistances and high heat generation amounts, and the cooling medium can be concentrated disposed in the heating positions, thereby decreasing the weight of the connector assembly, reducing the consumption of the cooling medium and saving the cost.

In order to verify the influence of the ratio of the volume of the cooling medium to the volume of the space between the outer wall of the electrical connection framework and the inner wall of the protective shell on the temperature rise of the connector assembly, the inventor selects the electrical connection frameworks 2 with the same specification and the protective shells 5 with the same specification, fills the cooling medium with different volume ratios between the electrical connection framework 2 and the protective shell 5, and then applies the same large current to test the temperature rise of the connector assembly. In this embodiment, the temperature rise of the connector assembly less than 50 K is a qualified value.

**Table 5: Influence of the ratio of the volume of the cooling medium to the volume of the space between the outer wall of the electrical connection framework and the inner wall of the protective shell on the temperature rise of the connector assembly**

| Ratio of the volume of the cooling medium to the volume of the space between the outer wall of the electrical connection framework and the inner wall of the protective shell (%) | | | | | | | | | |
|---|---|---|---|---|---|---|---|---|---|
| 0.03 | 0.05 | 0.1 | 0.5 | 1. 1 | 1.3 | 1.6. | 1.9 | 2.1 | 2.3 |

| Temperature rise of the connector assembly (K) | | | | | | | | | |
|---|---|---|---|---|---|---|---|---|---|
| 57.4 | 55.2 | 52.7 | 50.6 | 49.5 | 47,3 | 45.5 | 43.4 | 41.7 | 39.1 |

As can be seen from Table 5, when the ratio of the volume of the cooling medium to the volume of the space between the outer wall of the electrical connection framework 2 and the inner wall of the protective shell 5 is less than or equal to 1.1%, the temperature rise of the heating position of the connector assembly exceeds 50 K, which does not meet the use requirement. Therefore, the inventor selects that the ratio of the volume of the cooling medium to the volume of the space between the outer wall of the electrical connection framework 2 and the inner wall of the protective shell 5 is greater than 1.1%.

In some embodiments, the cooling medium is unevenly distributed between the outer wall of the electrical connection framework and the inner wall of the protective shell. In the space of the vehicle body, different positions generate different amounts of heat, and at positions that need better heat dissipation, more cooling medium should be filled between the outer wall of the electrical connection framework 2 and the inner wall of the protective shell. When the electrical connection framework 2 is bent, the bent portion generate more heat, so that more cooling medium needs to be filled; and at a straight portion of the electrical connection framework that generate less heat, less or even no cooling medium may be filled, thereby decreasing the weight of the connector assembly, reducing the consumption of the cooling medium and saving the cost.

In some embodiments, the cooling medium is a heat-conductive tape, heat-conductive insulation elastic rubber, a flexible heat-conductive pad, a heat-conductive filling agent, or a heat-conductive insulation potting compound. The connector assembly having a solid-state cooling medium can reduce the failure of the electrical connection framework 2 and the connection terminal 3 caused by the high temperature due to electrification, decrease the diameter of the electrical connection framework 2, prolong the service life of the connector 1 and improve the safety of the whole vehicle.

The heat-conductive tape adopts highly heat-conductive rubber as a heat-conductive base material, and is backed with a pressure-sensitive heat-conductive adhesive on one side or both sides, so that the bonding is reliable and the strength is high. The heat-conductive tape is thin and flexible, and it is very easy to fit the surfaces of the device and the radiator. The heat-transfer tape can also adapt to the changes of cold and hot temperatures, thereby ensuring the consistency and stability of the properties.

The heat-conductive insulation elastic rubber adopts silicone rubber as a base material, and ceramic particles such as boron nitride and alumina as a filling agent, so that the heat-conductive effect is very good. Under the same conditions, the heat impedance of the heat-conductive insulation elastic rubber is smaller than those of other heat-conductive materials. The heat-conductive insulation elastic rubber is soft, clean, free of pollution and radiation, and highly insulative. The fiberglass reinforcement provides good mechanical properties, so that the heat-conductive insulation elastic rubber is puncture-resistant, shear-resistant and tear-resistant, and can be backed with the heat-conductive pressure-sensitive adhesive.

The flexible heat-conductive pad is a thick heat-conductive material. The base materials used at present are substantially silicone rubber and foamed rubber. The silicone rubber is characterized by good elasticity, and the foamed rubber is characterized by large deformation range, good heat-conductive effect and higher dielectric strength level.

The heat-conductive filling agent is a filler added to the base material to increase the heat conductivity coefficient of the material. The conventional heat-conductive fillers include aluminum oxide, magnesium oxide, zinc oxide, aluminum nitride, boron nitride, silicon carbide, etc.

The heat-conductive potting compound is an electronic glue mainly made of silicone rubber. The heat-conductive potting compound has excellent resistance to high and low temperatures, maintains elasticity in a temperature range of -60 °C to 200 °C, and effectively increases the waterproof and anti-seismic function of an electronic device after potting to ensure the application reliability of the electronic device.

In some embodiments, the cooling medium is disposed on the outer periphery of the electrical connection framework by means of injection molding, extrusion molding, dipping molding, foaming, winding, weaving, pouring or wrapping.

The injection molding refers to a process of making a semi-finished part with a certain shape by operations such as pressurization, injection, cooling and separation of molten raw materials.

The extrusion molding is an efficient, continuous and low-cost molding processing method, which is an early technology in the processing of polymer materials. The extrusion molding is a molding processing method with the most varieties, the largest changes, high productivity, strong adaptability, wide uses and the largest proportion of output in the field of polymer processing.

The dipping molding refers to a process in which a workpiece is heated to a certain temperature, then dipping it into a dipping solution so that the dipping solution is solidified on the workpiece.

The foaming refers to the formation of a honeycomb or porous structure through the addition and reaction of physical or chemical foaming agents during foaming molding or in a foaming polymer material. The basic steps of the foam molding are the formation, the growth or expansion, and the stabilization of bubble nuclei. Under the given temperature and pressure, the solubility of the gas decreases until the saturation, thereby allowing excess gas to be removed and bubbles to be formed, thereby achieving nucleation.

The winding is to directly wind the heat-conductive tape around the outer periphery of the electrical connection framework 2.

The weaving is to organize a plurality of strip-shaped cooling media by interlacing or hooking them with each other, and fill them between the electrical connection framework 2 and the protective shell 5.

The pouring is to pour the unformed cooling medium between the electrical connection framework 2 and the protective shell 5 and wait for solidification.

The wrapping is to wrap the whole heat-conductive tape around the outer periphery of the electrical connection framework 2.

In some embodiments, the cooling medium contains one or more selected from the group consisting of quartz glass, silicon carbide, mica, sand and gravel, diamond, silicon, graphene and derivatives thereof and silicone grease. The type of the cooling medium may be selected as needed.

Quartz glass is made by melting various pure natural quartz (e.g., crystal, quartz sand, etc.).

Silicon carbide is an inorganic substance with a chemical formula of SiC, which is made of raw materials such as quartz sand, petroleum coke (or coal coke), sawdust (salt is needed when producing green silicon carbide) through high temperature smelting in a resistance furnace.

Mica is a rock-forming mineral, which presents a hexagonal flaky crystal form and is one of the main rock-forming minerals.

Sand and gravel refer to a loose mixture of sand and gravel.

Diamond is a mineral composed of carbon, and it is the hardest natural substance in nature. Graphite can form synthetic diamond at a high temperature and a high pressure.

Silicon mainly exists in the form of oxides and silicates with high melting points, and it is also a material for semiconductors.

Graphene is a new material with a monolayer two-dimensional honeycomb lattice structure in which carbon atoms connected by sp² hybridization are closely packed.

Silicone grease is refined from silicone oil as a base oil thickening inorganic thickener, and it has good sealability, waterproofness, solvent resistance and creepage resistance.

In some embodiments, a cooling rate of the cooling medium to the electrical connection framework 2 is 0.05 K/s to 10 K/s. In order to verify the influence of the cooling rate of the cooling medium on a temperature rise of the electrical connection framework 2, the inventor selects ten electrical connection frameworks 2 with the same cross-sectional area, the same material and the same length and conducts the same current thereto, cools the electrical connection frameworks 2 with the cooling media of different cooling rates, reads and records the temperature rise of each of the electrical connection frameworks 2 in Table 6.

The experimental method is to conduct the same current, in a closed environment, to each of the electrical connection frameworks 2 which adopts the cooling media of different cooling rates, record a temperature before the current conduction and a stable temperature after the current conduction, and take an absolute value of a difference therebetween. In this embodiment, a temperature rise less than 50 K is a qualified value.

**Table 6: Influence of different cooling rates of the cooling media on the temperature rise of the electrical connection framework 2**

| Cooling rate of the cooling medium (K/min) | | | | | | | | | | | | |
|---|---|---|---|---|---|---|---|---|---|---|---|---|
| 0.03 | 0.05 | 0.1 | 0.5 | 1 | 2 | 3 | 5 | 6 | 8 | 10 | 11 | 12 |

| Temperature rise of the electrical connection framework 2 (K) | | | | | | | | | | | | |
|---|---|---|---|---|---|---|---|---|---|---|---|---|
| 52.4 | 47.3 | 55.6 | 45.2 | 41.5 | 39.2 | 37.6 | 35.7 | 33.3 | 30.9 | 27.5 | 27.5 | 27.4 |

As can be seen from Table 6, when the cooling rate of the cooling medium is less than 0.05 K/s, the temperature rise of the electrical connection framework 2 is unqualified, and the temperature rise of the electrical connection framework 2 decreases as the cooling rate of the cooling medium increases. However, when the cooling rate of the cooling liquid is greater than 10 K/s, the temperature rise of the electrical connection framework 2 is not obviously decreased, and a higher cooling rate means a higher price and a more complicated process, so the inventor sets the cooling rate of the cooling medium as 0.05 K/s to 10 K/s.

In some embodiments, one of the connectors 1 is a charging cradle. The two ends of the electrical connection framework 2 are connected to one of the connectors 1, respectively. In some cases, one of the connectors 1 may be a charging cradle, and the connector 1 at the other end is charged through the electrical connection framework 2.

The present disclosure further provides a vehicle including the connector assembly having a solid-state cooling medium as described above.

Although some specific embodiments of the present disclosure have been described in detail by examples, it should be understood by those skilled in the art that the above examples are only for illustration rather than limiting the scope of the present disclosure. It should be understood by those skilled in the art that the above embodiments can be modified without departing from the scope and the spirit of the present disclosure. The scope of the present disclosure is defined by the appended claims.

## Claims

1. A connector assembly having a solid-state cooling medium, comprising at least one electrical connection framework and connectors connected to two ends of the electrical connection framework, wherein an outer periphery of the electrical connection framework is sleeved with a protective shell having shielding effectiveness, and a solid-state or semi-solid-state cooling medium is at least partially filled between an outer wall of the electrical connection framework and an inner wall of the protective shell.

2. The connector assembly having a solid-state cooling medium according to claim 1, wherein the connector comprises a connection terminal, to which the electrical connection framework is electrically connected by means of welding or crimping.

3. The connector assembly having a solid-state cooling medium according to claim 1, wherein the electrical connection framework comprises a rigid solid conductor.

4. The connector assembly having a solid-state cooling medium according to claim 1, wherein a portion of the electrical connection framework is flexible.

5. The connector assembly having a solid-state cooling medium according to claim 1, wherein the electrical connection framework comprises at least one bent portion.

6. The connector assembly having a solid-state cooling medium according to claim 1, wherein the electrical connection framework has a cross section of polygonal shape, all corners of which are chamfered or rounded.

7. The connector assembly having a solid-state cooling medium according to claim 1, wherein the electrical connection framework has a cross section of one or more selected from the group consisting of a circular shape, an elliptical shape, a rectangular shape, a polygonal shape, an A shape, a B shape, a D shape, an M shape, a P shape, an N shape, an O shape, an S shape, an E shape, an F shape, an H shape, a K shape, an L shape, a T shape, a U shape, a V shape, a W shape, an X shape, a Y shape, a Z shape, a semi-arc shape, an arc shape and a wavy shape.

8. The connector assembly having a solid-state cooling medium according to claim 1, wherein a cross-sectional area of the electrical connection framework is 0.3 mm² to 240 mm².

9. The connector assembly having a solid-state cooling medium according to claim 1, wherein the protective shell is made of a material containing conductive metal or conductive plastic cement.

10. The connector assembly having a solid-state cooling medium according to claim 1, wherein the connector further comprises a shielding inner shell which is made of a material containing conductive metal or conductive plastic cement.

11. The connector assembly having a solid-state cooling medium according to claim 9 or 10, wherein a transfer impedance of the conductive metal or the conductive plastic cement is less than 100 mQ.

12. The connector assembly having a solid-state cooling medium according to claim 9 or 10, wherein the conductive plastic cement is a polymer material containing conductive particles, and the conductive particles are made of a material containing one or more selected from the group consisting of metal, conductive ceramics, a carbon-containing conductor, a solid electrolyte and a mixed conductor; and
the polymer material contains one or more selected from the group consisting of tetraphenyl ethylene, polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluorinated liquid, polyurethane, polyterephthalic acid, polyurethane elastomer, styrene block copolymer, perfluoroalkoxy alkane, chlorinated polyethylene, polyphenylene sulfide, polystyrene, cross-linked polyolefin, ethylene-propylene rubber, ethylene/vinyl acetate copolymer, chloroprene rubber, natural rubber, styrene butadiene rubber, nitrile rubber, silicone rubber, butadiene rubber, isoprene rubber, ethylene propylene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, and polyoxymethylene resin.

13. The connector assembly having a solid-state cooling medium according to claim 12, wherein a material of the metal contains one or more selected from the group consisting of nickel, cadmium, zirconium, chromium, cobalt, manganese, aluminum, tin, titanium, zinc, copper, silver, gold, phosphorus, tellurium and beryllium.

14. The connector assembly having a solid-state cooling medium according to claim 12, wherein the carbon-containing conductor contains one or more selected from the group consisting of graphite powder, a carbon nanotube material, a graphene material, graphite silver or graphene silver.

15. The connector assembly having a solid-state cooling medium according to claim 10, wherein the protective shell is electrically connected to the shielding inner shell by means of crimping or welding.

16. The connector assembly having a solid-state cooling medium according to claim 10, wherein an impedance between the protective shell and the shielding inner shell is less than 80mQ.

17. The connector assembly having a solid-state cooling medium according to claim 1, wherein a thickness of the protective shell accounts for 1% to 15% of an outer diameter of the electrical connection framework.

18. The connector assembly having a solid-state cooling medium according to claim 1, wherein a volume of the cooling medium accounts for more than 1.1% of a volume between the outer wall of the electrical connection framework and the inner wall of the protective shell.

19. The connector assembly having a solid-state cooling medium according to claim 1, wherein the cooling medium is unevenly distributed between the outer wall of the electrical connection framework and the inner wall of the protective shell.

20. The connector assembly having a solid-state cooling medium according to claim 1, wherein the cooling medium is a heat-conductive tape, a heat-conductive insulation elastic rubber, a flexible heat-conductive pad, a heat-conductive filling agent or a heat-conductive insulation potting compound.

21. The connector assembly having a solid-state cooling medium according to claim 20, wherein the cooling medium is disposed on the outer periphery of the electrical connection framework by means of injection molding, extrusion molding, dipping molding, foaming, winding, weaving, pouring or wrapping.

22. The connector assembly having a solid-state cooling medium according to claim 1, wherein the cooling medium contains one or more selected from the group consisting of quartz glass, silicon carbide, mica, sand and gravel, diamond, silicon, graphene and derivatives thereof or silicone grease.

23. The connector assembly having a solid-state cooling medium according to claim 1, wherein a cooling rate of the cooling medium to the electrical connection framework is 0.05 K/s to 10 K/s.

24. The connector assembly having a solid-state cooling medium according to claim 1, wherein one of the connectors is a charging cradle.

25. A vehicle, comprising the connector assembly having a solid-state cooling medium according to any one of claims 1 to 24.
